# EUROPEAN PATENT APPLICATION

(11) **EP 2 849 054 A1**
(43) Date of publication of application: **18.03.2015**
(21) Application number: 14160944.6
(22) Date of filing: 20.03.2014
(51) Int. Cl.: G06F 3/16, G10L 15/00, G06F 3/0481

(54) **Apparatus and method for selecting a control object by voice recognition**

(30) Priority: 12.09.2013 KR 20130109992
(71) Applicant: Diotek Co., Ltd., Geumcheon-gu, Seoul (KR)
(72) Inventor: Shin, Jongwon, 423-746 Gyeonggi-do (KR); Kim, Semi, 151-015 Seoul (KR); Jung, Kanglae, 151-890 Seoul (KR); Doh, Jeongin, 137-930 Seoul (KR); Youn, Jehseon, 443-270 Gyeonggi-do (KR); Kim, Kyeongsun, 448-785 Gyeonggi-do (KR)
(74) Representative: Kazi, Ilya

(57) **Abstract**

In some examples, there are provided an apparatus and a method for selecting a control object through voice recognition. The apparatus for selecting a control object through voice recognition according to the present invention may include one or more processing devices, in which the one or more processing devices may be configured to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information. There is an advantage in that since an electronic device can be controlled through voice recognition even when using an application that does not store a control command in advance, accessibility of a user to the electronic device can be improved.

## Description

### CROSS-REFERENCE TO RELATED APPLICATIONS

This application claims the priority of Korean Patent Application No. 2013-0109992 filed on September 12, 2013, in the Korean Intellectual Property Office, the disclosure of which is incorporated herein by reference.

### BACKGROUND OF THE INVENTION

### Field of the Invention

The present invention relates to an apparatus and a method for selecting a control object through voice recognition, and more particularly, to an apparatus and a method for selecting a control object through voice recognition by using first identification information based on display information about a control object.

### Description of the Related Art

As the number of users that use electronic devices such as a computer, a notebook PC, a smart phone, a tablet PC and navigation increases, the importance of a user interface that enables interaction between the electronic device and the user has grown.

In many cases, a typical user interface depends on a physical input through an input device such as a keyboard, a mouse, or a touch screen. However, it is not easy for visually handicapped people who cannot see a displayed screen or people who have trouble manipulating the input device such as the touch screen to manipulate the electronic device by using the aforementioned user interface.

When even people without a disability are in a tough situation where it is difficult for the people without a disability to manipulate the electronic device such as driving a car or carrying packages in both hands, it is not easy for the people without a disability to manipulate the electronic device by using the aforementioned user interface.

Therefore, there is a demand for development of a user interface capable of improving accessibility to the electronic device. As an example of the user interface capable of improving accessibility to the electronic device, there is a voice recognition technique that controls the electronic device by analyzing a voice of a user.

In order to control the electronic device through the voice of the user by using the voice recognition technique, a control command to be matched to the voice of the user needs to be previously stored in the electronic device.

When the control command to be matched to the voice of the user is stored in a platform, a basic setting of the electronic device, for example, a basic control of the electronic device such as the volume control or the brightness control of the electronic device can be performed through voice recognition.

In contrast, in order to control each individual application through the voice recognition, the control command to be matched to the voice of the user needs to be stored in each individual application.

Accordingly, in order to enable the voice recognition in an application that does not support the voice recognition or to further add a voice recognition function, it is required to develop or update the application needs so as to allow the control command to be matched to the voice of the user to be stored in the application.

However, since kinds of applications embedded in the electronic device are diversified from day to day, it is not easy to store the control command to be matched to the voice of the user all kinds of applications. Thus, there is a problem in that it is difficult to implement a general purpose voice recognition system to be interworked in various applications.

For this reason, the number of applications that support the voice recognition is small and even the application that supports the voice recognition has a limitation on operations to be performed through the voice recognition. Thus, there is substantially a limitation on improving the accessibility to the electronic device.

Accordingly, there is a demand for development of a technique capable of improving the accessibility to the electronic device through the voice recognition.

### SUMMARY OF THE INVENTION

In an aspect, the present invention may provide an apparatus and a method capable of controlling an electronic device through voice recognition even when a user uses an application that does not store a control command in advance.

In another aspect, the present invention may also provide an apparatus and a method capable of selecting multi-lingual control objects through voice recognition without distinction of a language used by a user.

Aspects of the present invention are not limited to the above described aspects, other aspects and/or objects not described above will be understood by a person who skilled in the art from the following description.

In order to obtain the above described aspect, the apparatus for selecting a control object through voice recognition according to an exemplary embodiment of the present invention may include one or more processing devices, in which the one or more processing devices may be configured to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information.

According to another optional characteristic of the present invention, the second identification information may include synonym identification information which may be a synonym of the first identification information.

According to still another optional characteristic of the present invention, the second identification information may include at least one of translation identification information in which the first identification information may be translated in a reference language and phonetic identification information in which the first identification information may be phonetically represented as the reference language.

According to still another optional characteristic of the present invention, the second identification information may include pronunciation string identification information which may be a pronunciation string of the first identification information.

According to still another optional characteristic of the present invention, the one or more processing devices may display the second identification information.

According to still another optional characteristic of the present invention, the first identification information may be obtained based on display information about the control object.

According to still another optional characteristic of the present invention, the first identification information may be obtained based on application screen information.

According to still another optional characteristic of the present invention, the first identification information may be obtained through optical character recognition (OCR).

According to still another optional characteristic of the present invention, the first identification information may correspond to a symbol obtained based on the control object.

According to still another optional characteristic of the present invention, the input information may include voice pattern information obtained by analyzing a feature of the voice of the user, and the matching of the input information to the identification information may include matching of the identification information to the voice pattern information.

According to still another optional characteristic of the present invention, the input information may include text information recognized from the voice of the user through voice recognition, and the matching of the input information to the identification information may include matching of the identification information to the text information.

In order to obtain the above described aspect, the method for selecting a control object through voice recognition according to an exemplary embodiment of the present invention may include obtaining input information on the basis of a voice of a user; matching the input information to at least one first identification information obtained based on a control object and second identification information corresponding to the first identification information; obtaining matched identification information matched to the input information within the first identification information and the second identification information; and selecting a control object corresponding to the matched identification information.

According to another optional characteristic of the present invention, the second identification information may include synonym identification information which may be a synonym of the first identification information.

According to still another optional characteristic of the present invention, the second identification information may include at least one of translation identification information in which the first identification information may be translated in a reference language and phonetic identification information in which the first identification information may be phonetically represented as the reference language.

According to still another optional characteristic of the present invention, the second identification information may include pronunciation string identification information which may be a pronunciation string of the first identification information.

According to still another optional characteristic of the present invention, the method may further include displaying the second identification information.

In order to obtain the above described aspect, there is the computer-readable medium that stores command sets according to an exemplary embodiment, in which when the command sets are executed by a computing apparatus, the command sets may cause the computing apparatus to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information.

Other detailed contents of embodiments are included in the specification and drawings.

As described above, in accordance with the control object selecting apparatus according to the exemplary embodiment of the present invention, even when the control commands are not previously stored in an application, since the electronic device can be controlled through the voice recognition, accessibility of the user to the electronic device can be improved.

According to exemplary embodiments of the invention, there is an advantage in that multi-lingual control objects can be selected through voice recognition without distinction of a language used by a user, so that it is possible to improve convenience of the user.

Effects according to the present invention are not limited to the above contents, and more various effects are included in the present specification.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 illustrates a block diagram of an apparatus for selecting a control object according to an exemplary embodiment of the present invention;
FIG. 2 illustrates a flowchart of a method for selecting a control object according to an exemplary embodiment of the present invention;
FIG. 3 illustrates first identification information obtained in the apparatus for selecting a control object according to the exemplary embodiment of the present invention and second identification information (synonym identification information) corresponding to the first identification information;
FIG. 4 illustrates the first identification information obtained in FIG. 3 and second identification information (translation identification information) corresponding to the first identification information;
FIG. 5 illustrates the first identification information obtained in FIG. 3 and second identification information (pronunciation string identification information) corresponding to the first identification information.
FIG. 6 illustrates first identification obtained in the apparatus for selecting a control object according to the exemplary embodiment of the present invention and second identification information corresponding to the first identification information;
FIG. 7 illustrates first identification obtained in the apparatus for selecting a control object according to the exemplary embodiment of the present invention and second identification information corresponding to the first identification information;
FIG. 8 illustrates a screen on which second identification information is displayed in the apparatus for selecting a control object according to the exemplary embodiment of the present invention;
FIG. 9 illustrates first identification information corresponding to a symbol according to an exemplary embodiment of the present invention and second identification information corresponding to the first identification information; and
FIG. 10 illustrates examples of a symbol and first identification information corresponding to the symbol.

### DETAILED DESCRIPTION OF THE PREFERRED EMBODIMENT

Various advantages and features of the present invention and methods accomplishing thereof will become apparent from the following description of embodiments with reference to the accompanying drawings. However, the present invention is not limited to exemplary embodiment disclosed herein but will be implemented in various forms. The exemplary embodiments are provided by way of example only so that a person of ordinary skilled in the art can fully understand the disclosures of the present invention and the scope of the present invention. Therefore, the present invention will be defined only by the scope of the appended claims.

Although first, second, and the like are used in order to describe various components, the components are not limited by the terms. The above terms are used only to discriminate one component from the other component. Therefore, a first component mentioned below may be a second component within the technical spirit of the present invention.

The same reference numerals indicate the same elements throughout the specification.

Respective features of various exemplary embodiments of the present invention can be partially or totally joined or combined with each other and as sufficiently appreciated by those skilled in the art, various interworking or driving can be technologically achieved and the respective exemplary embodiments may be executed independently from each other or together executed through an association relationship.

When any one element for the present specification 'transmits' data or signal to other elements, it means that the element may directly transmit the data or signal to other elements or may transmit the data or signal to other elements through another element.

Voice recognition basically means that an electronic device analyzes a voice of a user and recognizes the analyzed content as text. Specifically, when a waveform of the voice of the user is input to the electronic device, voice pattern information can be obtained by analyzing a voice waveform by referring to an acoustic model. Further, text having the highest matching probability in first identification information and second identification information can be recognized by comparing the obtained voice pattern information with the first identification information and the second identification information.

A control object in the present specification means an interface such as a button that is displayed on a screen of an apparatus for selecting a control object to receive an input of the user, and when the input of the user is applied to the displayed control object, the control object may perform a control operation that is previously determined by the apparatus for selecting a control object.

The control object may include an interface, such as a button, a check box and a text input field, that can be selected by the user through a click or a tap, but is not limited thereto. The control object may be all interfaces that can be selected through an input device such as a mouse or a touch screen.

Input information in the present specification means information obtained through a part of the voice recognition or the whole voice recognition on the basis of the voice of the user. For example, the input information may be voice pattern information obtained by analyzing a feature of a voice waveform of the user. Such voice pattern information may include voice feature coefficients extracted from the voice of the user for each short-time so as to express acoustic features.

The first identification information in the present specification means text that is automatically obtained based on the control object through the apparatus for selecting a control object, and the second identification information means text obtained so as to correspond to the first identification information.

The second identification information may include 'synonym identification information' which is a synonym of the first identification information, 'translation identification information' in which the first identification information is translated in a reference language, 'phonetic identification information' in which the first identification information is phonetically represented as the reference language, and 'pronunciation string identification information' which is a pronunciation string of the first identification information.

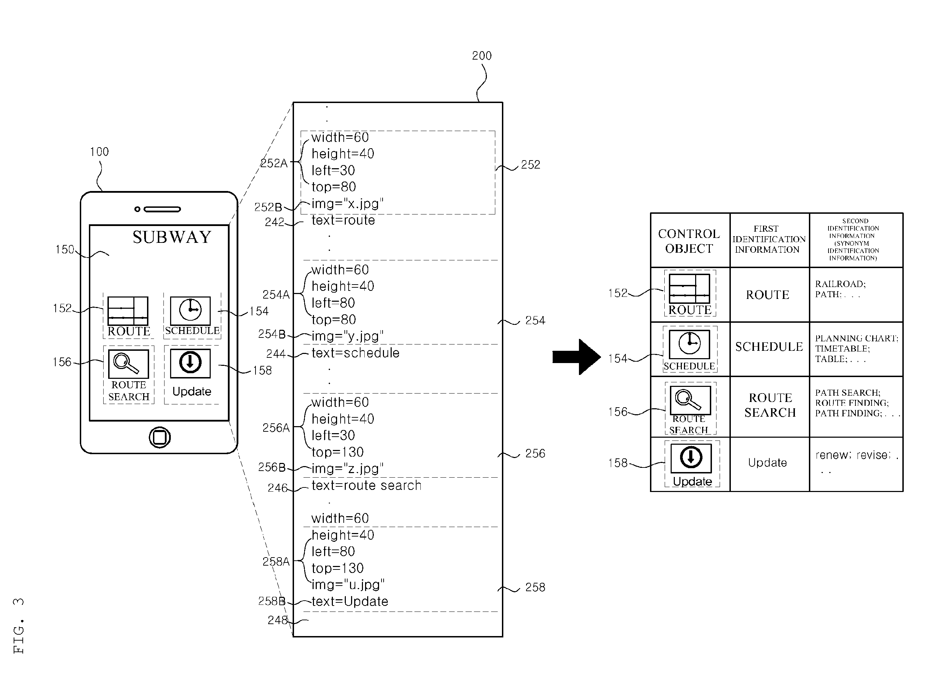

Meanwhile, the first identification information may be obtained based on display information about the control object, application screen information, text information about the control object, or description information about the control object, and the relevant descriptions will be presented below with reference to FIG. 3.

The display information about the control object in the present specification means information used to display a certain control object. For example, information about an image or icon of an object, and a size or position of the control object may be the display information. The control object may be displayed on the screen of the apparatus for selecting a control object on the basis of values of items constituting the display information or paths to reach the values.

The application screen information in the present specification means information used to display a certain screen in the application run in the apparatus for selecting a control object.

The text information about the control object in the present specification means a charter string indicating the control object, and the character string may be displayed together with the control object.

The description information about the control object in the present specification means information written by a developer to describe the control object.

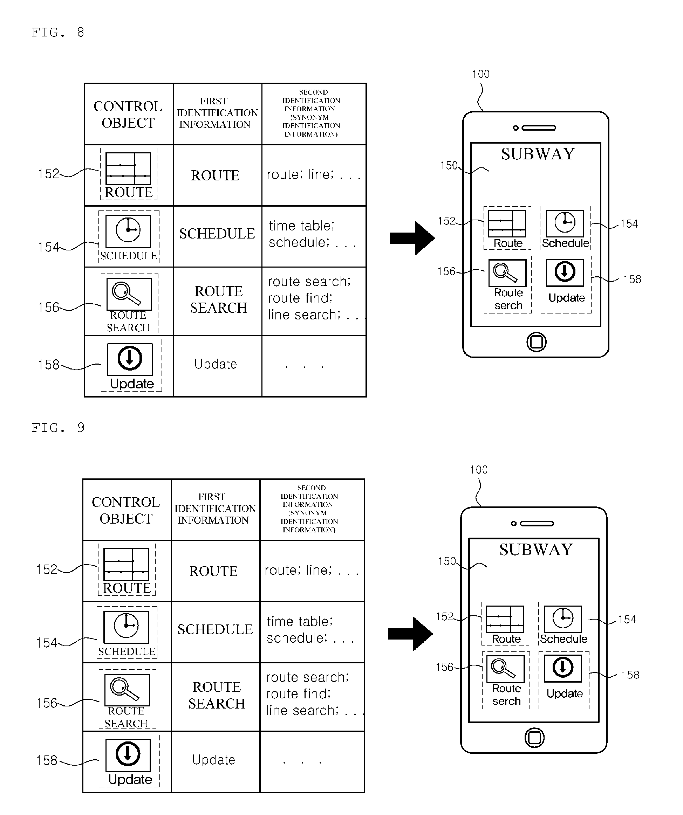

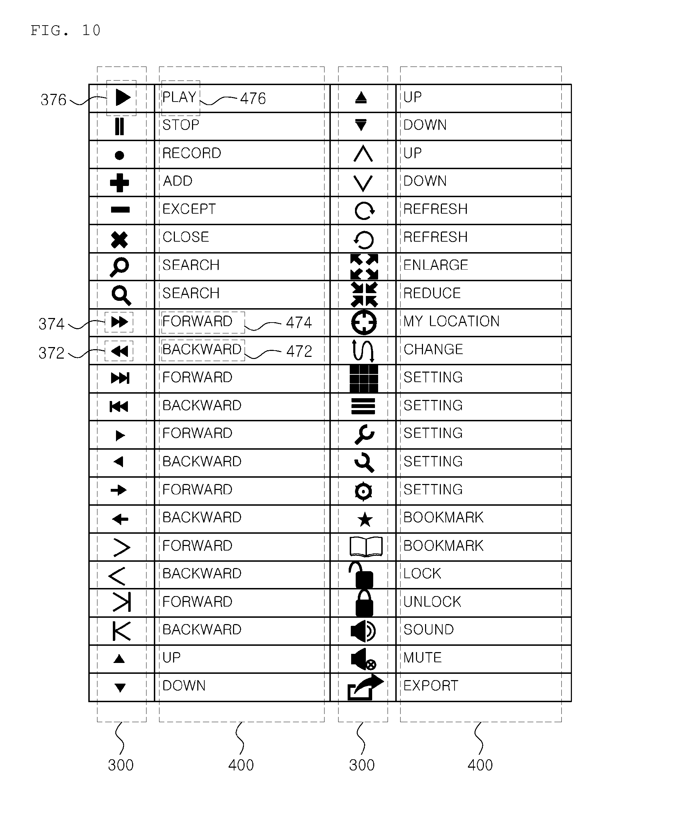

Meanwhile, the first identification information may correspond to a symbol obtained based on the control object, and the symbol and the first identification information may be in one-to-one correspondence, one-to-multi correspondence, multi-to-one correspondence, or multi-to-multi correspondence. The first identification information corresponding to the symbol will be described below with reference to FIGS. 9 and 10.

The symbol in the present specification means a figure, a sign, or an image that can be interpreted as a certain meaning without including text. In the case of the control object represented as the symbol, the symbol of the control object may generally imply a function performed by the control object in the application. For example, the symbol **`►'** may generally mean that a sound or an image is played, and the symbol '+' or '-' may mean that an item is added or removed.

The symbol may be obtained based on the display information about the control object or the application screen information.

Hereinafter, various embodiments will be described in detail with reference to the accompanying drawings.

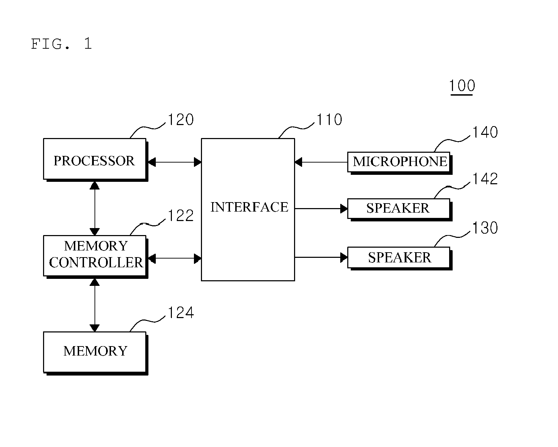

FIG. 1 illustrates a block diagram of an apparatus for selecting a control object according to an exemplary embodiment of the present invention.

Referring to FIG. 1, an apparatus for selecting a control object (hereinafter, also referred to as a "control object selecting apparatus") 100 according to the exemplary embodiment of the present invention a processor 120, a memory controller 122, and a memory 124, and may further include an interface 110, a microphone 140, a speaker 142, and a display 130.

The control object selecting apparatus 100 according to the exemplary embodiment of the present invention is a computing apparatus capable of selecting a control object through voice recognition, and includes one or more processing devices. The control object selecting apparatus may be devices such as a computer having an audio input function, a notebook PC, a smart phone, a tablet PC, navigation, PDA (Personal Digital Assistant), a PMP (Portable Media Player), a MP3 player, and an electronic dictionary, or may be a server capable of being connected to such devices or a distributed computing system including a plurality of computers. Here, the one or processing devices may include at least one or more processors 120 and the memory 124, and the plurality of processors 120 may share the memory 124.

The processing devices are configured to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information.

Basically, when voice pattern information obtained by analyzing the voice of the user is matched to the first identification information as text, `matched identification information' having the highest matching probability within the first identification information can be recognized.

When the 'matched identification information' having the highest matching probability within the first identification information is recognized, a control object corresponding to the `matched identification information.' Accordingly, even though a control command matched to the voice of the user is stored, the control object can be selected by the control object selecting apparatus.

When the control object selecting apparatus 100 uses only the first identification information in order to select the control object, a control obj ect intended by the user may not be selected due to influences of various factors such as linguistic habits of the user or a language environment to which the user belongs.

Accordingly, the control object selecting apparatus 100 uses the second identification information corresponding to the first identification information as well as the first identification information so as to take account of various factors such as linguistic habits of the user or a language environment to which the user belongs.

Accordingly, by matching the voice pattern information obtained by analyzing the voice of the user to the first identification information and the second identification information, identification information having the highest matching probability within the first identification information and the second identification information can be recognized, and a control object corresponding to the recognized identification information can be selected.

Meanwhile, a time of obtaining the second identification information or whether to store the second identification information may be implemented in various manners. For example, when the first identification information is obtained based on the control object, the control object selecting apparatus 100 may immediately obtain the second identification information corresponding to the obtained first identification information, store the obtained second identification information, and then use the stored second identification information together with the first identification information.

However, only when only the first identification information is obtained and the matched identification information matched to the input information does not exist as a matching result of the input information to the first identification information, the control object selecting apparatus 100 may obtain the second identification information corresponding to the first identification information. That is, the control object selecting apparatus 100 may obtain the second identification information corresponding to the first identification information as necessary and use the obtained second identification information.

The memory 124 stores a program or a command set, and the memory 124 may include a RAM (Random Access Memory), a ROM (Read-Only Memory), a magnetic disk device, an optical disk device, and a flash memory. Here, the memory 124 may store a language model DB that provides the voice pattern information and the text corresponding to the voice pattern information, or may store a DB that provides the second identification information corresponding to the first identification information. Meanwhile, the DBs may be disposed at the outside connected to the control object selecting apparatus via a network.

The memory controller 122 controls the access of units such as the processor 120 and the interface 110 to the memory 124.

The processor 120 performs operations for executing the program or the command set stored in the memory 124.

The interface 110 connects an input device such as the microphone 140 or the speaker 142 of the control object selecting apparatus 100 to the processor 120 and the memory 124.

The microphone 140 receives a voice signal, converts the received voice signal into an electric signal, and provides the converted electric signal to the interface 110. The speaker 142 converts the electric signal provided from the interface 110 into a voice signal and outputs the converted voice signal.

The display 130 displays visual graphic information to a user, and the display 130 may include a touch screen display that detects a touch input.

The control object selecting apparatus 100 according to the exemplary embodiment of the present invention selects a control object through voice recognition by using the program (hereinafter, referred to as a "control object selecting engine") that is stored in the memory 124 and is executed by the processor 120.

The control object selecting engine is executed in a platform or a background of the control object selecting apparatus 100 to obtain information about the control object from an application and causes the control object selecting apparatus 100 to select the control object through the voice recognition by using the first identification information obtained based on the information about the control object and the second identification information corresponding to the first identification information.

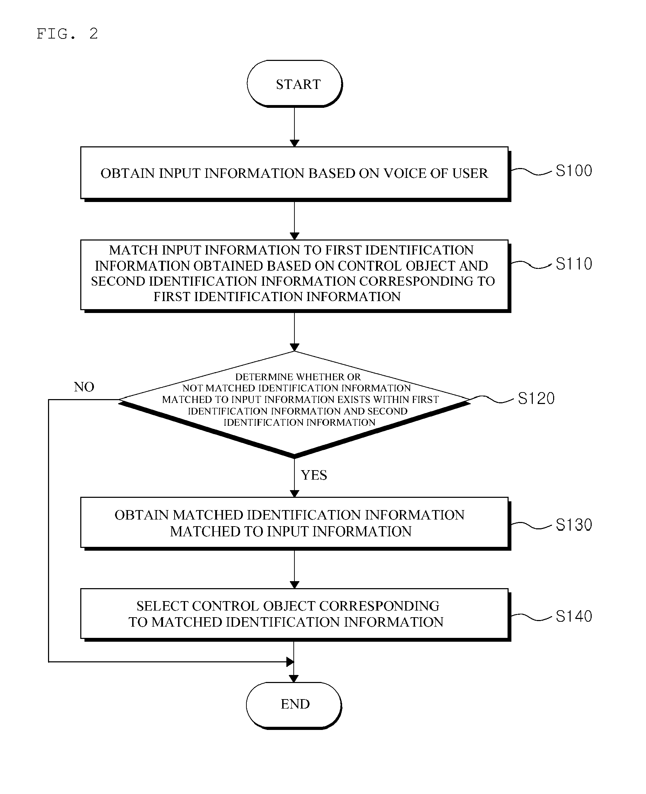

FIG. 2 is a flowchart of a method for selecting a control object according to an exemplary embodiment of the present invention. For the sake of convenience in description, the description will be made with reference to FIG. 3.

FIG. 3 illustrates first identification information obtained in the control object selecting apparatus according to the exemplary embodiment of the present invention and second identification information corresponding to the first identification information.

The control object selecting apparatus obtains input information on the basis of the voice of the user (S100).

Here, it has been described that the input information is voice pattern information obtained by analyzing a feature of the voice of the user, but is not limited thereto. The input information may be all information that can be obtained through a part of the voice recognition or the whole voice recognition on the basis of the voice of the user.

When the input information is obtained, the control object selecting apparatus matches the input information to at least one first identification information obtained based on the control object and second identification information corresponding to the first identification information (S110).

Referring to FIG. 3, when a subway application 150 is running on the control object selecting apparatus 100, a 'route button' 152, a 'schedule button' 154, a 'route search button' 156, and a 'update button' 158 correspond to control objects.

According to the exemplary embodiment of the present invention, the first identification information may be obtained based on the display information about the control object.

Referring to FIG. 3, display information 252, 254, 256 and 258 of information 200 about control objects may include a 'width' item, a 'height' item, a 'left' item and a 'top' item which are items 252A, 254A, 256A and 258A for determining sizes and positions of the control objects and values of 'img' items 252B, 254B, 256B and 258B that provides links to images of the control objects.

The aforementioned items 252A, 254A, 256A, 258A, 252B, 254B, 256B and 258B are arbitrary defined for the sake of convenience in description, and the kinds, number and names of items of the display information 252, 254, 256 and 258about the control objects may be variously modified.

Referring to FIG. 3, the values of the 'img' items 252B, 254B, 256B and 258B that provides the links of the images of the control objects 152, 154, 156 and 158 may be character strings for representing image file paths ('x.jpg,' 'y.jpg,' 'z.jpg,' and 'u.jpg') of the control objects 152, 154 and 156 or the images themselves.

Widths and heights of the images of the control objects 152, 154, 156 and 158are determined by the values of the 'width' item and the 'height' item among the items 252A, 254A, 256A and 258A for determining the sizes and positions of the control objects, and display positions of the control objects 152, 154, 156 and 158 are determined by the values of the 'left' item and the 'top' item. In this way, areas where the control objects 152, 154, 156 and 158 are displayed can be determined.

Referring to FIG. 3, the 'route button' 152 may be displayed as an image by the 'x.jpg' of the 'img' item 252B. Here, the 'x.jpg' is merely an example, and the control object may be displayed as an image by various types of files.

As illustrated in FIG. 3, when the image 'x.jpg' includes a text capable of being identified as a 'route,' and also when optical character recognition (OCR) is performed on the image 'x.jpg', the text 'route' included in the image 'x.jpg' is recognized.

As mentioned above, when the optical character recognition is performed on the image of the 'route button' 152 and the text 'route' is recognized, the recognized text 'route' corresponds to first identification information. That is, the first identification information obtained based on the 'route button' 152 corresponds to a 'route.' Similarly, first identification information obtained based on the 'schedule button' 154 corresponds to a 'schedule,' first identification information obtained based on the 'route search button' 156 corresponds to 'route search,' and first identification information obtained based on the 'update button' 158 corresponds to 'update.'

The second identification information is text obtained so as to correspond to the first identification information, and may be synonym identification information which is a synonym of the first identification information as illustrated in FIG. 3. That is, the second identification information corresponding to the first identification information 'route' may be synonym identification information which is a synonym of the first identification information, such as 'railroad,' or 'path.' Further, the second identification information corresponding to the first identification information 'update' in English may be synonym identification information which is a synonym of the first identification information, such as 'renew,' 'revise.' Meanwhile, when the first identification information includes a plurality of words, the second identification may be obtained for each word.

Here, the synonym identification information may be provided to the control object selecting apparatus through a synonym DB that stores synonyms of words. The synonym DB may be included in the control object selecting apparatus, or may provide synonym identification information to the control object selecting apparatus by being connected to the control object selecting apparatus via a network.

Meanwhile, the synonym identification information may include synonyms within a language different from the first identification information in addition to synonyms within the same language as the first identification information, and the synonyms within the different language may means that the synonym identification information is translated in a reference language.

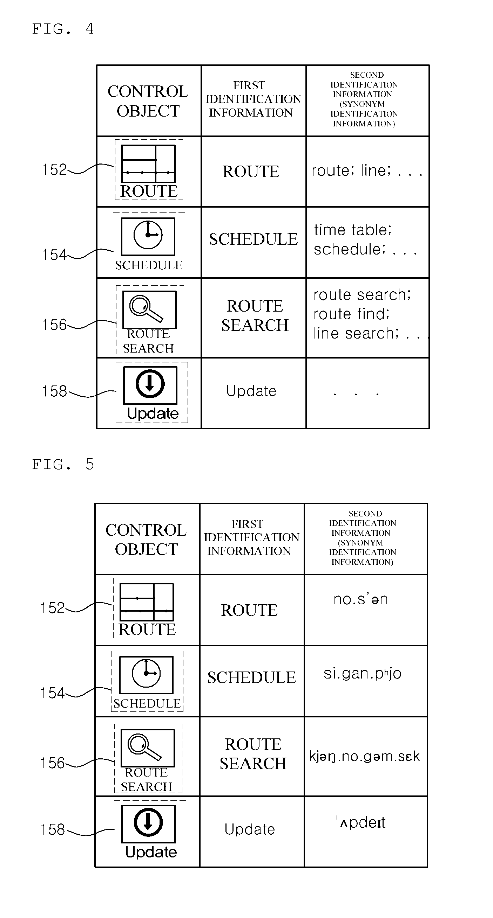

The second identification information may be the synonym identification information as described above, or the second identification information may be translation identification information in which the first identification information is translated in the reference language, phonetic identification information in which the first identification information is phonetically represented as the reference language, and pronunciation string identification information which is a pronunciation string of the first identification information. Various types of second identification information will be described below with reference to FIGS. 4 and 5.

The obtained voice pattern is compared with the first identification information and the second identification information through the matching of the first identification information and the second identification information to the input information, that is, the matching of the identification information to the voice pattern information, and the matched identification information having the same pattern as or the most similar pattern to the voice pattern within the first identification information and the second identification information is determined.

Meanwhile, by encoding the first identification information and the second identification information for each phoneme or each certain section by a method of encoding the voice pattern information from the voice of the user, the voice pattern information may be matched to the first identification information and the second identification information. The first identification information and the second identification information may be matched to the voice pattern information through static matching, cosine similarity comparison, or elastic matching.

The control object selecting apparatus determines whether or not matched identification information matched to the input information exists as a matching result of the first identification information and the second identification information to the input information (S120).

As stated above, the matched identification information having the same pattern as or the most similar pattern to the obtained voice pattern within the first identification information and the second identification information is determined as the matched identification information.

When it is determined that the matched identification information matched to the input information does not exist, the control object selecting apparatus may wait before the input information is obtained again, or may request for the user to make a voice again.

When it is determined that the matched identification information matched to the input information exists, the control object selecting apparatus obtains the matched identification information (S130).

Referring to FIG. 3, when input information "path finding" is obtained from the voice of the user, the second identification information 'path finding' corresponding to the first identification information 'route search' within the identification information 'rote,' 'schedule,' 'route search,' and 'update' and the second identification information corresponding to the first identification information may correspond to the matched identification information.

When the matched identification information is obtained, the control object selecting apparatus selects a control object corresponding to the matched identification information (S150).

That is, as described above, when the second identification information 'path finding' corresponds to the matched identification information, the control object selecting apparatus 100 selects the 'route search button' 156.

Here, the selecting of the control object may be performed through an input event or a selection event.

The event means an occurrence or an action that can be detected from the program, and examples of the event may include an input event for processing an input, an output event for processing an output, and a selection event for selecting a certain object.

The input event may be generated when an input such as a click, a touch or a key stroke is applied through an input device such as a mouse, a touchpad, a touch screen or a keyboard, or may be generated by processing an input as being virtually applied even though an actual input is not applied through the aforementioned input device.

Meanwhile, the selection event may be generated to select a certain control object, and the certain control object may be selected when the aforementioned input event, for example, a double click event or a tap event, occurs for the certain control object.

As described above, in accordance with the control object selecting apparatus according to the exemplary embodiment of the present invention, even when the control commands are not previously stored in an application, since the electronic device can be controlled through the voice recognition, accessibility of the user to the electronic device can be improved.

Meanwhile, according to the exemplary embodiment of the present invention, the first identification information may be obtained in various manners. For example, the first identification information may be obtained based on text information about the control object.

Referring again to FIG. 3, the information 200 about the control object selecting information may include text information 242, 244, 246 and 248 about the control objects.

When text is included in an image of the control object, the text is recognized through the optical character recognition, so that the first identification information can be obtained. When text information about the control object exists, the first identification information as the text can be immediately obtained from the text information.

Here, a part of the text information about the control object may be obtained as the first identification information. For example, when the text information includes a plurality of words, each word may be obtained as individual first identification information corresponding to the control object.

Meanwhile, according to the exemplary embodiment of the present invention, the first identification information may be obtained based on description information about the control object.

However, unlike the aforementioned text information, since the description information is information in which a developer writes description on the control object, the description information includes a quantity of text larger than the text information. At this time, when the entire description is obtained as the first identification information, matching accuracy or matching speed of the identification information to the input information may be decreased.

Accordingly, when the description information about the control object includes a plurality of words, only a part of the description information may be obtained as the first identification information. Furthermore, each part of the description information may be obtained as individual first identification information corresponding to the control object.

On the other hand, the first identification information may be obtained based on application screen information.

When the optical character recognition is performed on the application screen, all texts that can be displayed within the application screen can be obtained. When the text is obtained from the application screen, it is required to determine whether or not the text corresponds to the first identification information corresponding to the certain control object.

Accordingly, the control object selecting apparatus may determine the control object to be displayed in a first area within the application screen where the text is displayed and a second area corresponding to the first area, and may allow the text in the first area to correspond to the determined control object.

Here, the second area corresponding to the first area where the text is displayed may be an area including at least a part of a block where the text is displayed, an area closest to the block where the text is displayed, or an area such as an upper end or a lower end of the block where the text is displayed. Here, the second area corresponding to the first area is not limited to the aforementioned areas, and may be determined in various manners. Meanwhile, in order to determine the control object to be displayed in the second area, the display information about the control object may be referred.

As stated above, the first identification information may be obtained in various manners. Only one first identification information need not exist for each the control object, and a plurality of first identification information may correspond to one control object.

Moreover, the first identification information may be obtained by the control object selecting engine, but is not limited thereto. The first identification information may be obtained by an application being run.

FIG. 4 illustrates the first identification information obtained in the control object selecting apparatus according to the exemplary embodiment of the present invention and second identification information corresponding to the first identification information.

The second identification information may be translation identification information in which the first identification information is translated in a reference language. For the sake of convenience in description, it has been described that the reference language is set to English, for example.

Referring to FIG. 4, when the first identification information 'route' is obtained based on the control object 152, the second identification information corresponding to the first identification information may be translation identification information in which the first identification information is translated in English, such as 'route,' or 'line.'

Meanwhile, the reference language may be set based on locale information such as positional information of the control object selecting apparatus, a language set by the user or regional information.

In addition, the reference language may be relatively determined depending on the first identification information. For example, when the first identification information is in Korean, the first identification information is translated in English, and when the first identification information is in English, the first identification information is translated in Korean.

That is, when the first identification information 'update' in English is obtained based on the control object 158 in FIG. 4, the second identification information corresponding to the first identification information may be translation identification information in which the first identification information 'update' is translated in Korean, such as ' 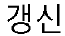 (update).'

Here, the translation identification information may be provided to the control object selecting apparatus through a dictionary DB that stores translated words of words. The dictionary DB may include a word bank and a phrase bank, but may include only the word bank in order to provide translation identification information of the first identification information, that is, translated words of words.

The dictionary DB may be included in the control object selecting apparatus, or may provide the translation identification information to the control object selecting apparatus by being connected to the control object selecting apparatus via a network.

On the other hand, the second identification information may be phonetic identification information in which the first identification information is phonetically represented as the reference language. For the sake of convenience in description, it has been described that the reference language is set to Korean, for example.

Referring to FIG. 4, when the first identification information 'update' is obtained based on the control object 158, the second identification information corresponding to the first identification information 'update' may be phonetic identification information in which the first identification information is phonetically represented in Korean, such as ' 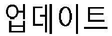 (upadate),' or ' 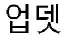 (update).'

Meanwhile, the reference language may be set based on locale information such as positional information of the control object selecting apparatus, a language set by the user or regional information.

In addition, the reference language may be relatively determined depending on the first identification information. For example, when the first identification information is in Korean, the first identification information is phonetically represented in English, and when the first identification information is in English, the first identification information is phonetically represented in Korean.

That is, when the first identification information 'route' in Korean is obtained based on the control object 152 in FIG. 4, the second identification information corresponding to the first identification information may be phonetic identification information in which the first identification information is phonetically represented in English, such as 'noseon,' 'noson,' or 'nosun.'

Here, the phonetic identification information may be provided through a phonogram DB that stores phonetically represented words, or may be provided to the control object selecting apparatus by processing the first identification information through a phonetic algorithm. The phonogram DB may be included in the control object selecting apparatus, or may provide the phonetic identification information to the control object selecting apparatus by being connected to the control object selecting apparatus via a network. The phonetic algorithm may be independently used, or may be auxiliary used when the phonetic identification information does not exist in the phonogram DB.

When the first identification information includes English alphabets, the phonetic algorithm may be an algorithm in which alphabets are pronounced as it is. For example, the phonetic identification information in which the first identification 'ABC' is phonetically represented in Korean corresponds to ' 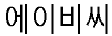 (ABC).'

Meanwhile, the phonetic algorithm may be an algorithm in which a character corresponding to a pronunciation string is obtained from pronunciation string identification information to be described in FIG. 5.

FIG. 5 illustrates the first identification information obtained in the control object selecting apparatus according to the exemplary embodiment of the present invention and second identification information corresponding to the first identification information.

The second identification information may be pronunciation string identification information which is a pronunciation string of the first identification information.

The pronunciation string identification information may be obtained by referring to a phonetic sign of the first identification information, and the phonetic sign may correspond to an international phonetic alphabet (IPA).

As illustrated in FIG. 5, the second identification information may be pronunciation string identification information of the first identification information according to the international phonetic alphabet, and since the pronunciation string identification information is in accordance with the international phonetic alphabet, the second identification information that is represented as only a pronunciation string of the first identification information may be obtained.

That is, when the second identification information is represented as only the pronunciation string, since a matching degree of pronunciation of the user and the pronunciation string of the second identification information can be determined, the control object can be selected through the voice recognition regardless of a language corresponding to the voice of the user.

Meanwhile, characters corresponding to the pronunciation string in the reference language may be obtained from the pronunciation string identification information, and the obtained characters may mean phonetic identification information in FIG. 5.

Here, the pronunciation string identification information may be provided to the control object selecting apparatus through a pronunciation string DB that stores pronunciation strings of words. The pronunciation string DB may be included in the control object selecting apparatus or may provide the pronunciation string identification information to the control object selecting apparatus by being connected to the control object selecting apparatus via a network.

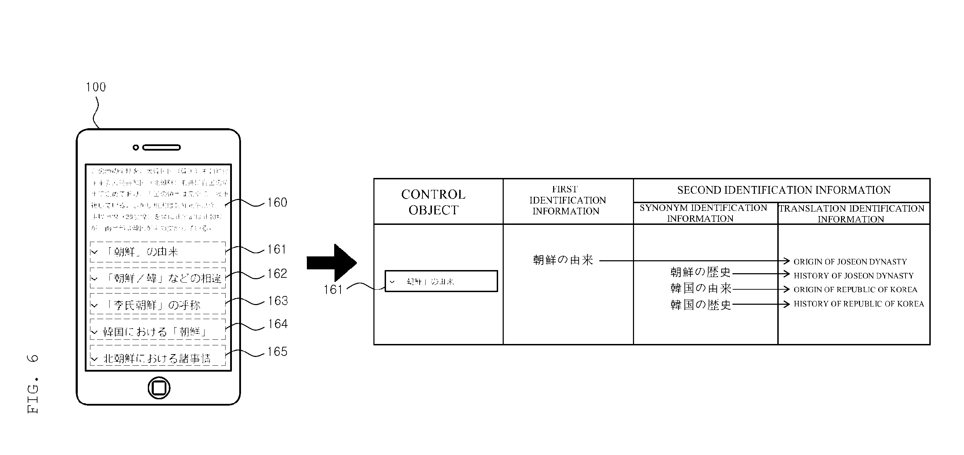

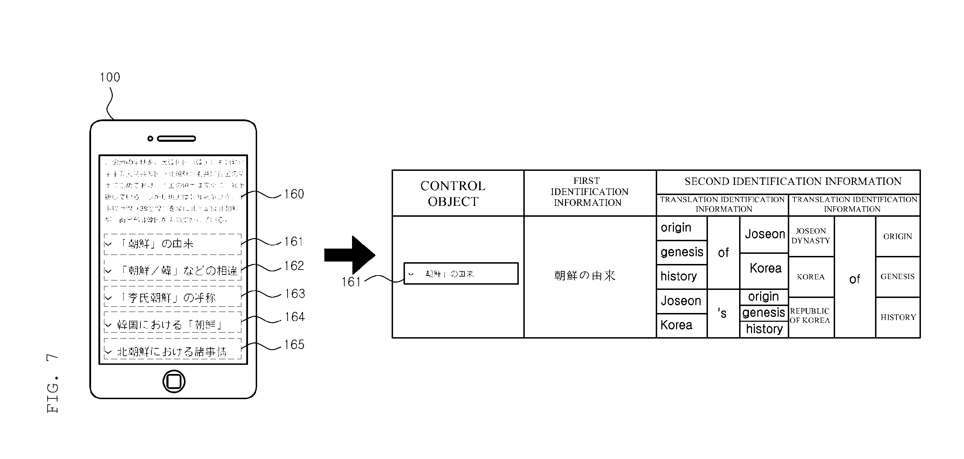

As described above, various types of second identification may be selected based on the first identification information, and the second identification information may be arbitrary designated by the user. In addition, the second identification information may be identification information in which the synonym identification information of the first identification information is translated in the reference language or identification information in which the first identification information is translated in a first language and is then translated in the reference language. As mentioned above, the second identification information obtained by processing the first identification information through one or more processes will be described below with reference to FIGS. 6 and 7.

FIG. 6 illustrates first identification information obtained in the control object selecting apparatus according to the exemplary embodiment of the present invention and second identification information corresponding to the first identification information.

Referring to FIG. 6, when a web browser 160 is run on the control object selecting apparatus 100 and the web browser 160 includes control objects 161, 162, 163, 164 and 165, the first identification information such as ' 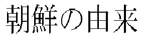 (the origin of Republic of Korea)' can be obtained based on the control object 161.

When the first identification information ` 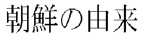 (origin of Joseon Dynasty)' is obtained, the synonym identification information which are synonyms of the first identification information corresponds to ' 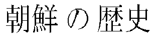 (history of Joseon Dynasty),' ' 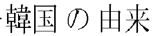 (origin of Republic of Korea),' and ' 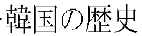 (history of Republic of Korea),' as illustrated in FIG. 6.

AS illustrated in FIG. 6, when the reference language is set to Korean, the second identification information may correspond to 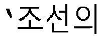 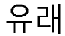 (origin of Joseon Dynasty)' in which the first identification information is translated in Korean, ' 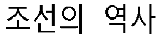 (history of Joseon Dynasty),' ' 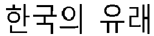 (origin of Republic of Korea),' and 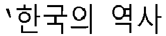 (history of Republic of Korea)' in which synonym identification information of the first identification information are translated in Korean.

FIG. 7 illustrates first identification obtained in the apparatus for selecting a control object according to the exemplary embodiment of the present invention and second identification information corresponding to the first identification information.

According to the exemplary embodiment of the present invention, the second identification information may include translation identification information in which the first identification information is translated in a first reference language or translation identification information in which the translation identification information is translated in a second reference language again.

As illustrated in FIG. 7, when the first identification information such as ' 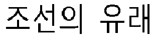 (origin of Joseon Dynasty)' is obtained based on the control object 161, the translation identification information such as 'origin of Joseon Dynasty (Republic of Korea),' 'genesis of Joseon Dynasty (Republic of Korea),' and 'history of Joseon Dynasty (Republic of Korea)' in which the first identification information is translated in the first reference language, for example, English can be obtained.

In addition, the translation identification information such as 'origin of Joseon Dynasty (Korea, Republic of Korea),' 'genesis of Joseon Dynasty (Korea, Republic of Korea),' and 'history of Joseon Dynasty (Korea, Republic of Korea)' which the translation identification information is translated again in the second language, for example, Korean can be obtained.

FIG. 8 illustrates a screen on which the second identification information obtained in FIG. 4 is displayed.

As illustrated in FIG. 8, the control object selecting apparatus 100 according to the exemplary embodiment of the present invention may display the second identification information corresponding to the control objects 152, 154, 156 and 158.

As illustrated in FIG. 8, the second identification information ('route,' 'schedule,' 'route search,' and 'update') may be displayed adjacent to the corresponding to the control objects 152, 154, 156 and 158, or may be displayed in areas where text ('route,' 'schedule,' 'route search,' and 'update' in FIG. 4) corresponding to the first identification information or symbols are positioned. The second identification information may be displayed together with the text recognized as the first identification information.

Accordingly, the user can know words that can be recognized by the control object selecting apparatus 100 by checking the second identification information displayed on the control object selecting apparatus 100.

On the other hand, the control object selecting apparatus according to the exemplary embodiment of the present invention may output the matched identification information or the second identification information and the first identification information about the control object as voices.

By outputting the second identification information and the first identification information about the control object as voices, a guideline on words that can be recognized by the control object selecting apparatus can be provided to the user, and by outputting the matched identification information as a voice, the user can conveniently select the control object without seeing the screen of the control object selecting apparatus.

FIG. 9 illustrates first identification information corresponding to a symbol according to an exemplary embodiment of the present invention and second identification information corresponding to the first identification information.

According to the exemplary embodiment of the present invention, the first identification information may correspond to the symbol obtained based on the control object.

Referring to FIG. 9, when a media player application 170 is running on the control object selecting apparatus 100, the control objects corresponds to a 'backward button' 172, a 'forward button' 174, a 'play button' 176.

As illustrated in FIG. 9, when the control objects 172, 174 and 176 do not include text, that is, when the control objects 172, 174 and 176 include symbols ('◄◄,' '►►,' and '►'), the control selecting apparatus 100 according to the exemplary embodiment of the present invention may obtain the symbols ('◄◄,' '►►,' and '►') on the basis of the control objects 172, 174 and 176, and obtain the first identification information ('backward,' 'forward,' 'play').

The symbol can be obtained based on the display information about the control object like the first identification information is obtained based on the display information about the control object.

Referring to FIG. 9, the 'backward button' 172 may be displayed as an image by 'bwd.jpg' of an 'img' item 272B. Further, when image pattern matching or the optical character recognition (OCR) is performed on the "bwd. jpg, " the symbol '◄◄' can be obtained. Similarly, when the image pattern matching or the optical character recognition (OCR) is performed on "play. jpg" and "fwd. jpg, " the symbols '►' and '►►' can be obtained.

Here, the image pattern matching is a manner in which features are extracted from a target image such as "bwd.jpg," "play.jpg," or "fwd. jpg, " and then an image having the same pattern or similar pattern from a comparison group that is previously set or is generated through a heuristic manner or posterior description of the user. The image pattern matching may be performed using template matching, neural network, and hidden Markov model (HMM), but is not limited thereto. The image pattern matching may be performed by various methods.

The symbol may be obtained by the control object selecting engine and stored in the memory, but is not limited thereto. The symbol may be obtained by an application being rung and stored in the memory.

As mentioned above, the symbol obtained based on the control object corresponds to the first identification information. The first identification information corresponding to the symbol will be explained below with reference to FIG. 10.

FIG. 10 illustrates examples of a symbol and first identification information corresponding to the symbol.

The symbols '◄◄,' '►►' and '►'372, 374 and 376 can be obtained as the symbols of the 'backward button' 172 (see FIG. 9), the 'forward button' 174 (see FIG. 9) and the 'play button' 176 (see FIG. 9).

As illustrated in FIG. 10, the obtained symbols correspond to the first identification information. Referring to FIG. 10, in the case of the symbol '◄◄' 372, first identification information 'forward' 472 can be obtained, in the case of the symbol '►►' 374, first identification information 'forward' 474 can be obtained, and in the case of the symbol '►' 376, first identification information 'play' 476 can be obtained.

Subsequently, the second identification information corresponding to the obtained first identification information 472, 474 and 476, for example, the translation identification information of the first identification information can be obtained. Referring to FIG. 9, the translation identification information such as 'backward,' 'play' and 'forward' into which the first identification information 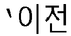 (backward),' ` 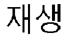 (play)' and ' 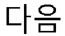 (forward)' are translated in English. The second identification information may be the synonym identification information, phonetic identification information and pronunciation string identification information of the first identification information in addition to the translation identification information, as illustrated in FIGS. 3 to 7.

Meanwhile, the symbol 300 illustrated in FIG. 10 or the identification information 400 corresponding to the symbol are merely examples, and the kinds and number of the symbols and the identification information corresponding to the symbol may be variously implemented.

For example, it is not required that one symbol corresponds to one identification information, and since meanings of symbols may be different depending on applications, one symbol may correspond to a plurality of identification information having different meanings from each other.

As stated above, when one symbol corresponds to the plurality of identification information, the plurality of identification information may be prioritized, and the matched identification information may be determined depending on a priority.

Moreover, one symbol may correspond to the first identification information having different meanings depending on applications. For example, the symbol '►' 376 may correspond to the first identification 'pay' in the media player application, whereas the symbol '►' 376 may correspond to the first identification 'forward' in the web browser or an electronic book application.

Meanwhile, according to the exemplary embodiment, the symbol may be obtained based on the application screen information.

When the control object is displayed on the application screen, and also when the optical character recognition is performed on the application screen, information that can be recognized as text or a character sign within the application screen can be obtained.

However, when only the information that can be recognized as a character sign within the application screen, it is required to determine the control object corresponding to the symbol. When the text is obtained from the application screen, the first identification information corresponding to the text may be determined by the same method as the method of determining the control object corresponding to the symbol.

Meanwhile, according to the exemplary embodiment of the present invention, the input information may text itself recognized by further comparing the voice pattern information obtained from the voice of the user with a language model DB. The language model DB may be included in the control object selecting apparatus, or may be connected to the control object selecting apparatus via a network.

When the input information is text recognized from the voice of the user through the voice recognition, the matching of the input information to the first identification information may performed by comparing the recognized text with the first identification information itself.

In some examples, there are provided an apparatus and a method for selecting a control object through voice recognition. The apparatus for selecting a control object through voice recognition according to the present disclosure may include one or more processing devices, in which the one or more processing devices may be configured to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information. There may be an advantage in that since an electronic device can be controlled through voice recognition even when using an application that does not store a control command in advance, accessibility of a user to the electronic device can be improved.

Combinations of each block of the accompanying block diagram and each step of the flow chart can be implemented by algorithms or computer program instructions comprised of firmware, software, or hardware. Since these algorithms or computer program instructions can be installed in processor of a universal computer, a special computer or other programmable data processing equipment, the instructions executed through a processor of a computer or other programmable data processing equipment generates means for implementing functions described in each block of the block diagram or each step of the flow chart. Since the algorithms or computer program instructions can be stored in a computer available or computer readable memory capable of orienting a computer or other programmable data processing equipment to implement functions in a specific scheme, the instructions stored in the computer available or computer readable memory can produce items involving an instruction means executing functions described in each block of the block diagram or each step of the flow chart. Since the computer program instructions can be installed in a computer or other programmable data processing equipment, a series of operation steps are carried out in the computer or other programmable data processing equipment to create a process executed by the computer such that instructions implementing the computer or other programmable data processing equipment can provide steps for implementing functions described in functions described in each block of the block diagram or each step of the flow chart.

Further, each block or each step may indicate a part of a module, a segment, or a code including one or more executable instructions for implementing specific logical function(s). Furthermore, it should be noted that in some alternative embodiments, functions described in blocks or steps can be generated out of the order. For example, two blocks or steps illustrated continuously may be implemented simultaneously, or the blocks or steps may be implemented in reverse order according to corresponding functions.

The steps of a method or algorithm described in connection with the embodiments disclosed in the present specification may be embodied directly in hardware, in a software module executed by a processor, or in a combination of the two. The software module may reside in RAM memory, flash memory, ROM memory, EPROM memory, EEPROM memory, register, hard disk, a removable disk, a CD-ROM, or any other form of storage medium known in the art. An exemplary storage medium is coupled to the processor such that the processor can read information from, and write information to, the storage medium. Otherwise, the storage medium may be integrated with the processor. The processor and the storage medium may reside in an application-specific integrated circuit (ASIC). The ASIC may reside in a user terminal. Otherwise, the processor and the storage medium may reside as discrete components in a user terminal.

The present invention has been described in more detail with reference to the exemplary embodiments, but the present invention is not limited to the exemplary embodiments. It will be apparent to those skilled in the art that various modifications can be made without departing from the technical sprit of the invention. Accordingly, the exemplary embodiments disclosed in the present invention are used not to limit but to describe the technical spirit of the present invention, and the technical spirit of the present invention is not limited to the exemplary embodiments. Therefore, the exemplary embodiments described above are considered in all respects to be illustrative and not restrictive. The protection scope of the present invention must be interpreted by the appended claims and it should be interpreted that all technical spirits within a scope equivalent thereto are included in the appended claims of the present invention.

## Claims

1. An apparatus for selecting a control object through voice recognition, the apparatus comprising:
one or more processing devices,
wherein the one or more processing devices are configured:
to obtain input information on the basis of a voice of a user,
to match the input information to at least one first identification information obtained based on a control object and second identification information corresponding to the first identification information,
to obtain matched identification information matched to the input information within the first identification information and the second identification information, and
to select a control object corresponding to the matched identification information.

2. The apparatus for selecting a control object according to claim 1, wherein the second identification information includes synonym identification information which is a synonym of the first identification information.

3. The apparatus for selecting a control object according to any one of claims 1 or 2, wherein the second identification information includes at least one of translation identification information in which the first identification information is translated in a reference language and phonetic identification information in which the first identification information is phonetically represented as the reference language.

4. The apparatus for selecting a control object according to any one of claims 1 to 3, wherein the second identification information includes pronunciation string identification information which is a pronunciation string of the first identification information.

5. The apparatus for selecting a control object according to any one of claims 1 to 4, wherein the one or more processing devices display the second identification information.

6. The apparatus for selecting a control object according to any one of claims 1 to 5, wherein the first identification information is obtained based on display information about the control object.

7. The apparatus for selecting a control object according to claim 6, wherein the first identification information is obtained based on application screen information.

8. The apparatus for selecting a control object according to claim 6 or 7, wherein the first identification information is obtained through optical character recognition, OCR.

9. The apparatus for selecting a control object according to any one of claims 6 to 8, wherein the first identification information corresponds to a symbol obtained based on the control object.

10. The apparatus for selecting a control object according to any one of claims 1 to 9,
wherein the input information includes voice pattern information obtained by analyzing a feature of the voice of the user, and
the matching of the input information to the identification information includes matching of the identification information to the voice pattern information.

11. The apparatus for selecting a control object according to any one of claims 1 to 10,
wherein the input information includes text information recognized from the voice of the user through voice recognition, and
the matching of the input information to the identification information includes matching of the identification information to the text information.

12. A method for selecting a control object through voice recognition, the method comprising:
obtaining input information on the basis of a voice of a user;
matching the input information to at least one first identification information obtained based on a control object and second identification information corresponding to the first identification information;
obtaining matched identification information matched to the input information within the first identification information and the second identification information; and
selecting a control object corresponding to the matched identification information.

13. The method for selecting a control object according to claim 12, wherein the second identification information includes synonym identification information which is a synonym of the first identification information, or
wherein the second identification information includes at least one of translation identification information in which the first identification information is translated in a reference language and phonetic identification information in which the first identification information is phonetically represented as the reference language, or
wherein the second identification information includes pronunciation string identification information which is a pronunciation string of the first identification information.

14. The method for selecting a control object according to any one of claims 12 or 13, further comprising:
displaying the second identification information.

15. A computer-readable medium that stores command sets, wherein when the command sets are executed by a computing apparatus,
the command sets cause the computing apparatus to obtain input information on the basis of a voice of a user, to match the input information to at least one first identification information obtained based on a control object and second identification information corresponding to the first identification information, to obtain matched identification information matched to the input information within the first identification information and the second identification information, and to select a control object corresponding to the matched identification information.
